(19) Europäisches Patentamt

European Patent Office

Office européen des brevets

(11) **EP 1 327 612 B1**

(12) **EUROPÄISCHE PATENTSCHRIFT**

(45) Veröffentlichungstag und Bekanntmachung des Hinweises auf die Patenterteilung:
**06.10.2004   Patentblatt 2004/41**

(51) Int Cl.⁷: **C03C 3/06**, C03C 4/00, C03B 19/14

(21) Anmeldenummer: **02027124.3**

(22) Anmeldetag: **04.12.2002**

(54) **Quarzglasrohling für ein optisches Bauteil sowie Verfahren zur Herstellung und Verwendung desselben**

Quartz glass blank for preparing an optical component as well as its preparation and application

Ebauche en verre de silice pour la fabrication d'un element optique ainsi que sa preparation et application de celle-ci

(84) Benannte Vertragsstaaten:
**AT DE FR GB NL**

(30) Priorität: **06.12.2001   DE 10159962**

(43) Veröffentlichungstag der Anmeldung:
**16.07.2003   Patentblatt 2003/29**

(73) Patentinhaber: **Heraeus Quarzglas GmbH & Co. KG**
**63450 Hanau (DE)**

(72) Erfinder:
• **Kühn, Bodo**
  **63450 Hanau (DE)**

• **Uebbing, Bruno, Dr.**
  **63755 Alzenau (DE)**
• **Trommer, Martin, Dr.**
  **36381 Schlüchtern (DE)**
• **Ochs, Stefan, Dr.**
  **65520 Bad Camberg (DE)**
• **Fischer, Gero**
  **63839 Kleinwallstadt (DE)**
• **Holst, Ulla, Dr.**
  **70197 Stuttgart (DE)**

(56) Entgegenhaltungen:
**EP-A- 0 673 888**          **WO-A-99/38814**

**Beschreibung**

Die vorliegende Erfindung betrifft einen Quarzglasrohling für ein optisches Bauteil zur Übertragung ultravioletter Strahlung einer Wellenlänge von 250 nm und kürzer.

Weiterhin betrifft die Erfindung ein Verfahren zur Herstellung eines derartigen Quarzglasrohlings, umfassend die Herstellung eines ersten und eines zweiten Quarzglases durch Flammenhydrolyse einer Si-enthaltenden Verbindung, wobei sich das erste und das zweite Quarzglas im OH-Gehalt unterscheiden.

Außerdem betrifft die Erfindung eine Verwendung eines Quarzglasrohlings für die Herstellung eines Bauteils für den Einsatz in der Mikrolithographie in Verbindung mit ultravioletter Strahlung einer Wellenlänge von 250 nm und kürzer.

Optische Bauteile aus Quarzglas werden insbesondere für die Übertragung energiereicher, ultravioletter Laserstrahlung beispielsweise als optische Fasern oder in Form von Belichtungsoptiken in Mikrolithographiegeräten für die Herstellung hochintegrierter Schaltungen in Halbleiterchips eingesetzt. Die Belichtungssysteme moderner Mikrolithographiegeräte sind mit Excimerlasern bestückt, die energiereiche, gepulste UV-Strahlung einer Wellenlänge von 248 nm (KrF-Laser) oder von 193 nm (ArF-Laser) abgeben.

Kurzwellige UV-Strahlung kann in optischen Bauteilen aus synthetischem Quarzglas Defekte erzeugen, die zu Absorptionen führen. Neben den Bestrahlungsbedingungen hängen Art und Ausmaß einer Defektbildung und der dadurch induzierten Absorption von der Qualität des jeweiligen Quarzglases ab, die im wesentlichen durch strukturelle Eigenschaften, wie Dichte, Brechzahlverlauf und Homogenität und von der chemischen Zusammensetzung bestimmt wird.

Eine modellhafte Formel drückt diesen Zusammenhang zwischen den Bestrahlungsbedingungen, den Materialfaktoren und der induzierten Absorption $\alpha_{in}$ folgendermaßen aus:

$$\alpha_{in} = a \times \varepsilon^{b} \times P \qquad (1)$$

wobei a und b Materialfaktoren sind und $\varepsilon$ und P für die Energiedichte bzw. die Pulszahl stehen.

Die Anzahl der induzierten strukturellen Defekte und die dadurch induzierte Absorption sind also abhängig von der Anzahl der einwirkenden Laserpulse und deren Energiedichte sowie von Materialfaktoren.

Der Einfluß der chemischen Zusammensetzung des Quarzglases auf das Schädigungsverhalten bei der Bestrahlung mit energiereichem UV-Licht ist beispielsweise in der EP-A1 401 845 beschrieben. Eine hohe Strahlenbeständigkeit ergibt sich demnach bei einem Quarzglas, das sich durch hohe Reinheit, einen OH-Gehalt im Bereich von 100 bis ca. 1000 Gew-ppm und gleichzeitig durch eine relativ hohe Wasserstoffkonzentration von mindestens $5 \times 10^{16}$ Molekülen pro $cm^3$ (bezogen auf das Volumen des Quarzglases) auszeichnet. Weiterhin weist das bekannte synthetische Quarzglas eine Spannungsdoppelbrechung von weniger als 5 nm/cm auf, und es ist weitgehend frei von Sauerstoffdefektstellen.

In der EP-A1 401 845 werden außerdem Verfahren zur Herstellung von synthetischem Quarzglas durch Flammenhydrolyse siliziumhaltiger Verbindungen beschrieben. Diese lassen sich anhand der Ausgangssubstanzen und der Art und Weise der Verglasung der abgeschiedenen $SiO_2$-Partikel unterscheiden. Eine häufig eingesetzte Ausgangssubstanz bei der Herstellung von synthetischem Quarzglas durch Flammenhydrolyse ist $SiCl_4$. Es werden aber auch andere, beispielsweise chlorfreie siliciumhaltige organische Verbindungen verwendet, wie Silane oder Siloxane. In jedem Fall werden auf einem rotierenden Substrat $SiO_2$-Partikel schichtweise abgeschieden. Bei hinreichend hoher Temperatur auf der Oberfläche des Substrats kommt es zu einem unmittelbaren Verglasen der $SiO_2$-Partikel ("Direktverglasen"). Im Unterschied dazu wird bei dem sogenannten "Sootverfahren" die Temperatur während der Abscheidung der $SiO_2$-Partikel so niedrig gehalten, dass ein poröser Sootkörper gebildet wird, bei dem $SiO_2$-Partikel nicht oder wenig verglast sind. Das Verglasen unter Bildung von Quarzglas erfolgt beim Sootverfahren durch nachträgliches Sintern des Sootkörpers. Beide Herstellungsverfahren führen zu einem dichten, transparenten, hochreinen Quarzglas, wobei die Herstellungskosten beim Sootverfahren niedriger sind als beim Direktverglasen.

Um mechanische Spannungen innerhalb des Rohlings abzubauen und um eine homogene Verteilung der fiktiven Temperatur zu erreichen, wird dieser üblicherweise getempert. In der EP-A 401 845 wird ein Temperprogramm vorgeschlagen, bei dem der Rohling einer 50-stündigen Haltezeit bei einer Temperatur von etwa 1100 °C unterworfen wird und abschließend in einem langsamen Abkühlschritt mit einer Abkühlrate von 2 °/h auf 900 °C und dann im geschlossenen Ofen auf Raumtemperatur abgekühlt wird. Bei dieser Temperaturbehandlung kann es durch Ausdiffusion von Komponenten - insbesondere von Wasserstoff - zu lokalen Veränderungen der chemischen Zusammensetzung und zu einem Konzentrationsgradienten von den oberflächennahen Bereichen des Rohlings nach innen kommen. Um die defektausheilende Wirkung von Wasserstoff auf die Strahlenbeständigkeit des Quarzglases zu erzielen, wird daher in der EP-A1 401 845 empfohlen, den getemperten Quarzglas-Rohling nachträglich mit Wasserstoff zu beladen, indem dieser bei erhöhter Temperatur in wasserstoffhaltiger Atmosphäre behandelt wird.

In der Literatur sind eine Vielzahl von Schädigungsmustern beschrieben, bei denen es bei andauernder UV-Bestrahlung zu einem Anstieg der Absorption kommt. Die induzierte Absorption kann zum Beispiel linear ansteigen, oder es wird nach einem anfänglichen Anstieg eine Sättigung erreicht. Weiterhin wird beobachtet, dass eine anfänglich registrierte Absorptionsbande zunächst wenige Minuten nach Abschalten des Lasers verschwindet, sich aber nach erneuter Bestrahlung schnell wieder auf dem einmal erreichten Niveau wiederherstellt. Dieses Verhalten wird als "rapid-damage-process" (RDP) bezeichnet. Hintergrund diesen Verhaltens ist, dass Wasserstoffmoleküle die Netzwerkdefekte im Quarzglas absättigen, wobei aber die Stabilität der Bindungen an den Defektstellen gering ist, so dass sie erneut aufbrechen, wenn das Bauteil wieder bestrahlt wird. Es ist auch ein Schädigungsverhalten bekannt, bei dem sich strukturelle Defekte offenbar derart kumulieren, dass sie sich in einer plötzlichen, starken Zunahme der Absorption äußern. Der starke Anstieg der Absorption bei dem zuletzt beschriebenen Schädigungsverhalten wird in der Literatur als SAT-Effekt bezeichnet.

Bei dem aus der EP-A1 401 845 bekannten Quarzglas verursacht UV-Strahlung nur eine vergleichsweise geringe Absorptionszunahme, so dass sich dieses Quarzglas insoweit durch eine hohe Beständigkeit gegenüber kurzwelliger UV-Strahlung auszeichnet. Jedoch können neben dem Auftreten von Absorption bzw. reduzierter Transmission auch andere Schädigungsmechanismen wirksam werden, die sich beispielsweise in der Generierung von Fluoreszenz oder in einer Veränderung des Brechungsindex zeigen können.

Ein bekanntes Phänomen in diesem Zusammenhang ist die sogenannte "Kompaktierung", die während bzw. nach Laser-Bestrahlung mit hoher Energiedichte auftritt. Dieser Effekt äußerst sich in einer lokalen Dichteerhöhung, die zu einem Anstieg des Brechungsindex und damit zu einer Verschlechterung der Abbildungseigenschaften des optischen Bauteils führt.

Ein gegenteiliger Effekt kann jedoch ebenso auftreten, wenn ein optisches Bauteil aus Quarzglas mit Laserstrahlung geringer Energiedichte aber hoher Pulszahl beaufschlagt wird. Unter diesen Bedingungen wird eine sogenannte "Dekompaktierung" beobachtet (in der angelsächsischen Literatur auch als "rarefaction" bezeichnet), die mit einer Erniedrigung des Brechungsindex einhergeht. Dies führt zu einer Verschlechterung der Abbildungseigenschaften. In der Literatur wurde dies beschrieben von C. K. Van Peski, R. Morton und Z. Bor ("Behaviour of fused silica irradiated by low level 193 nm excimer laser for tens of billions of pulses", J. Non-Cryst. Solids 265 (2000) S.285-289).

Kompaktierung und Dekompaktierung sind somit Defekte, die sich nicht zwangsläufig in einer Zunahme der strahlungsinduzierten Absorption äußeren, die aber die Lebensdauer eines optischen Bauteils begrenzen können.

Der vorliegenden Erfindung liegt daher die Aufgabe zugrunde, einen Rohling aus synthetischem Quarzglas für ein optisches Bauteil für die Übertragung ultravioletter Strahlung einer Wellenlänge von 250 nm und kürzer bereitzustellen, das eine geringe induzierte Absorption aufweist und das gleichzeitig hinsichtlich Kompaktierung und Dekompaktierung optimiert ist. Weiterhin liegt der Erfindung die Aufgabe zugrunde, ein kostengünstiges Verfahren zur Herstellung eines derartigen optischen Bauteils sowie eine geeignete Verwendung dafür anzugeben.

Hinsichtlich des Rohlings wird diese Aufgabe erfindungsgemäß durch eine Ausführungsform eines Quarzglas-Rohlings gelöst, der die Kombination folgender Eigenschaften aufweist:

- ■ eine Glasstruktur im wesentlichen ohne Sauerstoffdefektstellen,

- ■ einen $H_2$-Gehalt im Bereich von 0,1 x $10^{16}$ Molekülen/cm$^3$ bis 4,0 x $10^{16}$ Molekülen/cm$^3$,

- ■ einen OH-Gehalt im Bereich von 125 Gew-ppm bis 450 Gew-ppm,

- ■ einen Gehalt an SiH-Gruppen von weniger als 5 x $10^{16}$ Molekülen/cm$^3$

- ■ eine Inhomogenität im Brechungsindex $\Delta$n von weniger als 2 ppm, und

- ■ eine Spannungsdoppelbrechung von weniger als 2 nm/cm.

Unter einer Glasstruktur, die im wesentlichen frei von Sauerstoffdefektstellen ist, wird hier eine Glasstruktur verstanden, bei der die Konzentrationen von Sauerstoff-Unterschussdefekten und von Sauerstoff-Überschussdefekten unterhalb der Nachweisbarkeitsgrenze der Methode von Shelby liegen. Diese Nachweis-Methode ist veröffentlicht in "Reaction of hydrogen with hydroxyl-free vitreous silica" (J. Appl. Phys., Vol. 51, No. 5 (Mai 1980), S. 2589-2593). Quantitativ ergibt sich dabei eine Anzahl an Sauerstoff-Unterschussdefekten oder an Sauerstoff-Überschussdefekten in der Glasstruktur von nicht mehr als etwa $10^{17}$ pro Gramm Quarzglas.

Idealerweise sind die angegebenen Komponenten über das Volumen des optischen Bauteils gleichmäßig verteilt. Die genannten Konzentrationsangaben beziehen sich hier auf das durchstrahlte Volumen des Bauteils. Der OH-Gehalt ergibt sich durch Messung der IR-Absorption nach der Methode von D. M. Dodd et al. ("Optical Determinations of OH in Fused Silica", J. Appl. Physics (1966), S. 3911). Der $H_2$-Gehalt wird anhand einer Raman-Messung ermittelt, die erstmals von Khotimchenko et al. vorgeschlagen worden ist ("Determining the Content of Hydrogen Dissolved in Quartz Glass Using the Methods of Raman Scattering and Mass Spectrometry" Zhurnal Prikladnoi Spektroskopii, Vol. 46, No. 6 (Juni 1987), S. 987-991). Der Gehalt an SiH-Gruppen wird mittels Raman-Spektroskopie ermittelt, wobei eine Kalibrierung anhand einer chemischen Reaktion erfolgt: Si-O-Si + H2 → Si-H + Si-OH , wie in Shelby "Reaction of hydrogen with hydroxyl-free vitreous silica" (J. Appl. Phys., Vol. 51, No. 5 (Mai 1980), S. 2589-2593) beschrieben.

Die Inhomogenität des Brechungsindex $\Delta n$ wird interferometrisch bei einer Wellenlänge von 633 nm (He-Ne-Laser) bestimmt, wobei sich $\Delta n$ als Differenz ergibt zwischen dem Maximalwert und dem Minimalwert der Brechungsindexverteilung ergibt, gemessen über dem optisch genutzten Flächenbereich, auch CA Bereich ("clear aperture") genannt. Der CA Bereich ergibt sich durch Projektion des durchstrahlten Volumens auf eine Ebene senkrecht zur Durchstrahlungsrichtung.

Die Spannungsdoppelbrechung wird interferometrisch bei einer Wellenlänge von 633 nm (He-Ne-Laser) nach der in "Measurement of the Residual Birefingence Distribution in Glass Laser Disk by Transverse Zeeman Laser" (Electronics and Communications in Japan, Part 2, Vol. 74, No. 5, 1991; (übersetzt aus Denshi Joho Tsushin Gakkai Ronbunshi Vol. 73-C-I, No. 10, 1990 pp. 652 - 657) beschriebenen Methode ermittelt.

Gegenüber den bisher in der Literatur beschriebenen und im Hinblick auf eine hohe Strahlenbeständigkeit gegenüber kurzwelliger UV-Strahlung ausgelegten Quarzglas-Qualitäten, zeichnet sich das Quarzglas, aus dem der erfindungsgemäße Rohling besteht unter anderem durch einen vergleichsweise geringen Wasserstoffgehalt bei einem mittleren OH-Gehalt aus. Derartiges Quarzglas ist weder mittels des oben beschriebenen "Sootverfahrens" noch durch "Direktverglasen" ohne weiteres herstellbar. Denn beim Direktverglasen wird üblicherweise Quarzglas mit einem OH-Gehalt von 450 bis 1200 Gew.-ppm und einem $H_2$-Gehalt um 1 x $10^{18}$ Moleküle/cm$^3$ erhalten, wogegen für Quarzglas, das nach dem Sootverfahren hergestellt wird, eher geringe OH-Gehalte im Bereich einiger Gew-ppm- bis 200 Gew-ppm und $H_2$ -Gehalte unterhalb der Nachweisgrenze typisch sind.

Es hat sich gezeigt, dass ein optisches Bauteil, das aus einem Quarzglas-Rohling mit den oben genannten Eigenschaften gefertigt wird, die Schädigungsmechanismen, die zu Kompaktierung und Dekompaktierung führen, vermieden oder zumindest deutlich reduziert sind. Brechzahländerungen im Verlauf des bestimmungsgemäßen Einsatzes deratiger Bauteile werden vollständig oder weitgehend vermieden, so dass die genannten Schädigungsmechanismen die Lebensdauer der aus dem erfindungsgemäßen Rohling gefertigten optischen Bauteile nicht begrenzen.

Diese Wirkung der oben genannten Eigenschaftskombination auf das Schädigungsverhalten gegenüber kurzwelliger UV-Strahlung ist empirisch nachgewiesen worden, wie im Folgenden noch näher erläutert wird. Dabei hat sich außerdem gezeigt, dass OH-Gehalte von weniger als 125 Gew-ppm, wie sie für das nach dem Sootverfahren hergestellte Quarzglas typisch sind, zu Kompaktierung führen. Quarzglas mit einem OH-Gehalt oberhalb von 450 Gew-ppm zeigt eine stärkere Tendenz zu Dekompaktierung.

Der zu RDP führende Schädigungsmechanismus wirkt sich bei $H_2$-Gehalten von mehr als 4,0 x $10^{16}$ Molekülen/ern$^3$ besonders deutlich aus, wenn der OH-Gehalt gering ist (< 450 Gew-ppm). Außerdem besteht eine gewisse Dekompaktierungstendenz. Bei einem $H_2$-Gehalt von weniger als 0,1 x $10^{16}$ Molekülen/cm$^3$ hingegen ist die oben erwähnte defektausheilende Wirkung von Wasserstoff so gering, dass es während des bestimmungsgemäßen Einsatzes des optischen Bauteils zu nicht tolerierbaren Transmissionsverlusten kommt.

Demgegenüber ist beim erfindungsgemäßen Rohling das Quarzglas sowohl im Hinblick auf Kompaktierung als auch Dekompaktierung optimiert, und es weist gleichzeitig eine geringe induzierte Absorption gegenüber kurzwelliger UV-Strahlung auf. Diese Optimierung ermöglicht insbesondere den Einsatz von nach dem Sootverfahren hergestellten Quarzglas auch für optische Bauteile, die hohen Anforderungen an die Konstanz ihrer Abbildungseigenschaften unterliegen.

Es hat sich als besonders günstig erwiesen, wenn der OH-Gehalt im Rohling im Bereich von 200 Gew-ppm bis 350 Gew-ppm liegt. Ein OH-Gehalt in diesem Bereich stellt einen bevorzugten Kompromiss zwischen Dekompaktierung und Kompaktierung einerseits und RDP andererseits dar.

Vorteilhafterweise liegt der $H_2$-Gehalt im Bereich von 1x $10^{16}$ Moleküle/cm$^3$ bis 3 x $10^{16}$ Moleküle/cm$^3$. Bei einem Quarzglas-Rohling mit einem $H_2$-Gehalt in diesem Bereich ist sowohl die günstige, defektausheilende Wirkung des Wasserstoffs in besonders hohem Maße vorhanden, und es wird gleichzeitig Dekompaktierung weitgehend vermieden. Auch diese Optimierung ermöglicht insbesondere den Einsatz von nach dem Sootverfahren hergestelltem Quarzglas auch für Anwendungsfälle, in denen Kompaktierung und Dekompaktierung kritische, die Lebensdauer begrenzende Effekte darstellen.

Hinsichtlich des Verfahrens zur Herstellung eines Quarzglasrohlings wird die oben angegebene Aufgabe ausgehend von dem eingangs genannten Verfahren erfindungsgemäß dadurch gelöst, dass durch Mischen des ersten Quarzglases und des zweiten Quarzglases ein Mischquarzglas mit einem mittleren OH-Gehalt im Bereich von 125 Gew-ppm bis 450 Gew-ppm erzeugt wird.

Wie bereits erwähnt, ist ein Quarzglas mit den oben für den erfindungsgemäßen Rohling genannten Eigenschaften mittels "Sootverfahren" oder "Direktverglasen" nicht ohne weiteres herstellbar. Dieses Herstellungsproblem betrifft insbesondere die Einstellung eines mittleren OH-Gehalts im Bereich von 125 Gew-ppm bis 450 Gew-ppm. Die Einstellung eines OH-Gehalts oberhalb von etwa 300 Gew-ppm durch Sootverfahren ist aufgrund einer beim Verglasen des Sootkörpers einsetzenden Blasenbildung problematisch, während durch Direktverglasen ein OH-Gehalt unterhalb von 450 Gew.-ppm praktisch nicht mehr erreichbar ist.

Erfindungsgemäß wird daher der Rohling durch Mischen von mindestens zwei Quarzglas-Qualitäten erhalten, die sich in ihren OH-Gehalten unterscheiden. Dabei handelt es sich um Quarzglas-Qualitäten, die mittels Sootverfahren und/oder mittels Direktverglasen erhalten werden. Das erste Quarzglas weist dabei einen niedrigeren als den einzustellenden, mittleren OH-Gehalt auf und das zweite Quarzglas einen höheren als den einzustellenden, mittleren OH-Gehalt. Je nach dem im Mischquarzglas eingestellten Mengenverhältnis von erstem Quarzglas und zweitem Quarzglas ergibt sich ein mittlerer OH-Gehalt zwischen den jeweiligen OH-Gehalten der Quarzglas-Qualitäten. Auf diese Weise lässt sich ein Mischquarzglas mit einem OH-Gehalt im Bereich von 125 Gew-pppm bis 450 Gew-ppm kostengünstig herstellen.

Das Mischen des ersten und des zweiten Quarzglases erfolgt entweder durch Erweichen der Gläser und Homogenisieren in einer Form, oder dadurch, dass aus den jeweiligen Quarzglas-Qualitäten hergestellte Formkörper miteinander verdrillt und anschließend durch Wenden homogenisiert werden. Das Homogenisieren von Quarzglas einer einzigen Qualität durch Verdrillen und Wenden ist in der DE 42 04 406 C2 und in der EP-A1 673 888 beschrieben.

Durch das Mischen der Quarzglas-Qualitäten wird auch hinsichtlich der übrigen Komponenten des erfindungsgemäßen Rohlings - insbesondere dem $H_2$-Gehalt und dem Gehalt an SiH-Gruppen - eine entsprechende mittlere Konzentration im Mischquarzglas erhalten.

Die daraus resultierenden Eigenschaften des Mischquarzglases stimmen mit denjenigen des erfindungsgemäßen Quarzglas-Rohlings überein, so dass auf die obigen Erläuterungen insoweit verwiesen wird.

In einer besonders bevorzugten Verfahrensweise werden zur Herstellung des ersten Quarzglases mit einem ersten OH-Gehalt $SiO_2$-Partikel gebildet und auf einem rotierenden Träger schichtweise unter Bildung eines porösen Sootkörpers abgeschieden und der Sootkörper wird anschließend verglast, und wobei zur Herstellung des zweiten Quarzglases mit einem von dem ersten Quarzglas sich unterscheidenden OH-Gehalt $SiO_2$-Partikel gebildet und auf einen rotierenden Träger unter Bildung einer verglasten Vorform abgeschieden werden. Bei dem ersten Quarzglas handelt es sich um ein nach dem Sootverfahren erzeugtes Quarzglas, während das zweite Quarzglas durch Direktverglasen hergestellt ist. Diese Quarzglas-Qualitäten sind für die Einstellung eines mittleren OH-Gehaltes gemäß der vorliegenden Erfindung besonders gut geeignet. Um Blasenbildung beim Verglasen zu vermeiden muss bei den nach dem Sootverfahren erhaltenen porösen Sootkörpern ein OH-Gehalt von maximal etwa 300 Gew-ppm eingestellt sein. Hierzu werden die Sootkörper üblicherweise einer Dehydratationsbehandlung in trocknender Atmosphäre unterzogen, wobei sich der OH-Gehalt bis zu wenigen Gew.-ppm absenken lässt. Nach dem Verglasen und einer anschließenden Homogenisierung des Quarzglases liegt der $H_2$-Gehalt bei den nach dem Sootverfahren hergestellten Quarzglas in der Regel unterhalb der Nachweisgrenze. Demgegenüber weisen die durch Flammenhydrolyse nach dem Direktverglasen erzeugten Quarzgläser herstellungsbedingt einen relativ hohen OH-Gehalt von einigen hundert Gew-ppm und einen hohen $H_2$-Gehalt von mehr als $10^{17}$ Molekülen/$cm^3$ auf. Durch Mischen der beiden Quarzglas-Qualitäten kann je nach Einstellung der jeweiligen Mengenverhältnisse kostengünstig ein Misch-Quarzglas erhalten werden, das im Hinblick auf den einzustellenden $H_2$-Gehalt, vorzugsweise jedoch hinsichtlich des OH-Gehalts, optimiert ist.

Insbesondere im Hinblick auf die oben erläuterten typischen Unterschiede der chemischen Zusammensetzungen von Quarzglas, das nach dem Sootverfahren erhalten wird und solchem, das durch Direktverglasen erzeugt wird, wird eine Verfahrensweise bevorzugt, bei der das erste Quarzglas einen OH-Gehalt im Bereich von 10 Gew-ppm bis 300 Gew-ppm, das zweite Quarzglas einen OH-Gehalt im Bereich von 400 Gew-ppm bis 1300 Gew-ppm aufweist. Dabei hat es sich als besonders vorteilhaft erwiesen, wenn das Mischen durch Verdrillen und Wenden von je einem Quarzglaskörper des ersten Quarzglases mit einem des zweiten Quarzglases erfolgt. Im einfachsten Fall handelt es sich bei den Quarzglaskörpern um langestreckte Zylinder (Rohre und/oder Stäbe), die in einem ersten Verfahrensschritt längsseitig aneinanderliegend erweicht und dabei um eine parallel zur Längsachse verlaufende Rotationsachse miteinander verdrillt werden. Dabei verbleibende Schlieren in einer Ebene senkrecht zur Rotationsachse werden durch einmaliges oder mehrmaliges Wenden beseitigt.

Hinsichtlich der Verwendung des Quarzglasrohlings wird die oben angegebene Aufgabe erfindungsgemäß dadurch gelöst, dass für einen Einsatz mit ultravioletter Strahlung einer Wellenlänge von 250 nm und kürzer und einer vorgegebenen Puls-energiedichte ε von mindestens 0,005 mJ/$cm^2$ ein Quarzglas mit einem OH-Gehalt $C_{OH}$, der folgender Bemessungsregel genügt, ausgewählt wird:

$$C_{OH} \text{ [Gew-ppm]} = 1700 \cdot \varepsilon^{0,4} \pm 50 \tag{2.}$$

Vorzugsweise wird ein Quarzglas ausgewählt mit einem OH-Gehalt $C_{OH}$, der folgender Bemessungsregel genügt:

$$C_{OH} \text{ [Gew-ppm]} = 1700 \cdot \varepsilon^{0,4} \pm 25.$$

Im Idealfall tritt weder Kompaktierung noch Dekompaktierung auf. In der Praxis wird aber in Abhängigkeit von den Bestrahlungsbedingungen und den Quarzglas-Eigenschaften entweder Kompaktierung oder Dekompaktierung beobachtet. Es wurde überraschend gefunden, dass ein Quarzglas mit einem nach Bemessungsregel (2) ausgelegten OH-Gehalt dem genannten Idealfall nahe kommt, das heißt es zeigt weder eine auffällige Kompaktierung noch eine nennenswerte Dekompaktierung, , wenn es kurzwelliger UV-Strahlung einer Wellenlänge von < 250 nm mit einer Pulsenergiedichte $\varepsilon$ zwischen 0,005 mJ/cm$^2$ und 0,1 mJ/cm$^2$ ausgesetzt wird.

Für eine Pulsenergiedichte im Bereiche der genannten Untergrenze $\varepsilon = 0,005$ mJ/cm$^2$ ergibt die Bemessungsregel (2) einen mittleren OH-Gehalt von zwischen 154 Gew-ppm und 254 Gew.ppm, vorzugsweise zwischen 179 Gew-ppm und 229 Gew-ppm.

Die Bemessungsregel (2) hat sich insbesondere für die Festlegung des OH-Gehalts im Hinblick auf geringe Kompaktierung und gleichzeitig geringe Dekompaktierung bewährt, wenn die Pulsenergiedichte kleiner als 0,1 mJ/cm$^2$, vorzugsweise kleiner als 0,05 mJ/cm$^2$, ist.

Für den oberen Grenzwert $\varepsilon = 0,1$ mJ/cm$^2$ ergibt sich dabei nach Bemessungsregel (2) ein OH-Gehalt zwischen 626 Gew-ppm und 726 Gew-ppm .

Eine weitere Annäherung an den genannten Idealfall wird erreicht, wenn für eine vorgegebene Pulszahl P ein Quarzglas ausgewählt wird, das einen Mindestwasserstoffgehalt $C_{H2min}$ und einen Maximalwasserstoffgehalt $C_{H2max}$ aufweist, die folgenden Bemessungsregeln genügen:

$$C_{H2min} \text{ [Moleküle/cm}^3\text{]} = 1,0 \times 10^6 \, \varepsilon^2 \, P \qquad\qquad (3)$$

und

$$C_{H2max} \text{ [Moleküle/cm}^3\text{]} = 2,0 \times 10^{18} \, \varepsilon \qquad\qquad (4)$$

(Pulsenergiedichte $\varepsilon$ jeweils in mJ/cm$^2$).

Durch die Einstellung des Wasserstoffgehalts anhand der Bemessungsregeln (3) und (4) wird das Quarzglas hinsichtlich seines Schädigungsverhaltens gegenüber kurzwellliger UV-Strahlung weiter optimiert. Bemessungsregel (3) ergibt eine Mindestkonzentration an Wasserstoff in Abhängigkeit von den Bestrahlungsbedingungen (Pulsenergiedichte und Pulszahl) an, unterhalb von der die defektausheilende Wirkung von Wasserstoff so gering ist dass es während des bestimmungsgemäßen Einsatzes des optischen Bauteils zu nicht tolerierbaren Transmissionsverlusten kommt. Bemessungsregel (4) hingegen definiert eine Obergrenze an Wasserstoff in Abhängigkeit von der Pulsenergiedichte, oberhalb der vermehrt RDP bei gleichzeitig geringer OH-Gehalten (< 450 Gew-ppm) bzw. Dekompaktierung auftritt. Die angegebenen Wasserstoff-Konzentrationen beziehen sich jeweils auf den Bereich innerhalb des Quarzglas-Rohlings, der in dem daraus gefertigten optischen Bauteil der höchsten Strahlungsbelastung ausgesetzt ist (CA-Bereich). Üblicherweise handelt es sich dabei um das Zentrum des Bauteils bzw. des Quarzglas-Rohlings.

Nachfolgend wird die Erfindung anhand von Ausführungsbeispielen und anhand von Zeichnungen näher erläutert. Dabei zeigt

**Figur 1** ein Diagramm zur Erläuterung des Auftretens von Kompaktierung oder Dekompaktierung in Abhängigkeit vom OH-Gehalt des Quarzglases und der Pulsenergiedichte der Strahlung;

**Figur 2** ein Diagramm zur Erläuterung des Auftretens von Kompaktierung oder Dekompaktierung in Abhängigkeit vom OH-Gehalt des Quarzglases bei konstanter Pulsenergiedichte als Funktion der Pulszahl

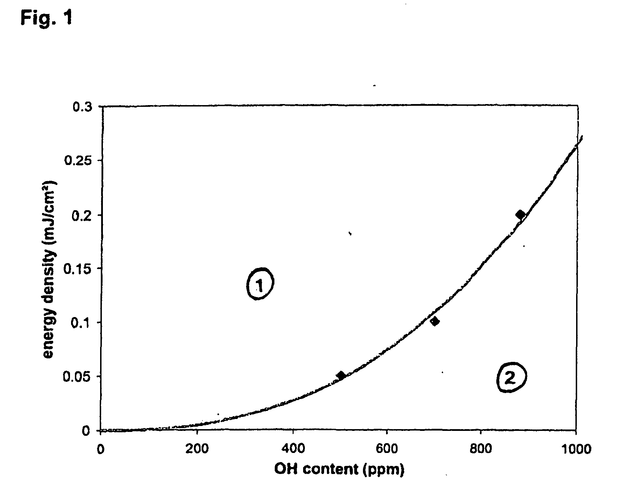

Bei dem Diagramm in **Figur 1** ist der OH-Gehalt $C_{OH}$ in Gew-ppm (in der Figur angegeben als "OH content") gegen die Pulsenergiedichte $\varepsilon$ in mJ/cm$^2$ (in der Figur angegeben als "energy density") aufgetragen. Die eingezeichnete Kurve beruht auf Schädigungsmessungen bei verschiedenen Quarzglas-Qualitäten, die sich in ihrem OH-Gehalt unterscheiden. Die Messung erfolgt unter Laserstrahlung einer Wellenlänge von 193 nm und bei einer Laserpulslänge zwischen 20 und 50 Nanosekunden. Die Laserpulslänge wird nach der in V. Liberman, M. Rothschild, J.H.C. Sedlacek, R.S. Uttaro, A. Grenville "Excimer-laser-induced densification of fused silica: laser-fluence and material-grade effects on scaling law", Journal Non-Cryst.Solids 244 (1999) S.159-171 beschriebenen Methode bestimmt.

Die unter den vorgenannten Bedingungen ermittelten Messwerte sind als Rauten dargestellt. Die Kurve repräsentiert diejenigen $C_{OH}/\varepsilon$-Paare, bei denen weder Kompaktierung noch Dekompaktierung beobachtet wird. Der Bereich (1) oberhalb der Kurve kennzeichnet den Bereich, in dem Kompaktierung auftritt, und der Bereich (2) unterhalb der Kurve kennzeichnet den Bereich, in dem Dekompaktierung auftritt.

Der Verlauf der Kurve lässt sich durch die Formel

$$C_{OH} \text{ [Gew-ppm]} = 1700 \cdot \varepsilon \text{ [mJ/cm}^2]^{0,4}$$

annähernd beschreiben.

Anhand der Kurve oder der vorgenannten Formel kann somit für jede Pulsenergiedichte zwischen 0 und 0,15 mJ/cm$^2$ der OH-Gehalt ausgewählt werden, den ein Quarzglas aufweisen muss, damit es weder Kompaktierung noch Dekompaktierung zeigt.

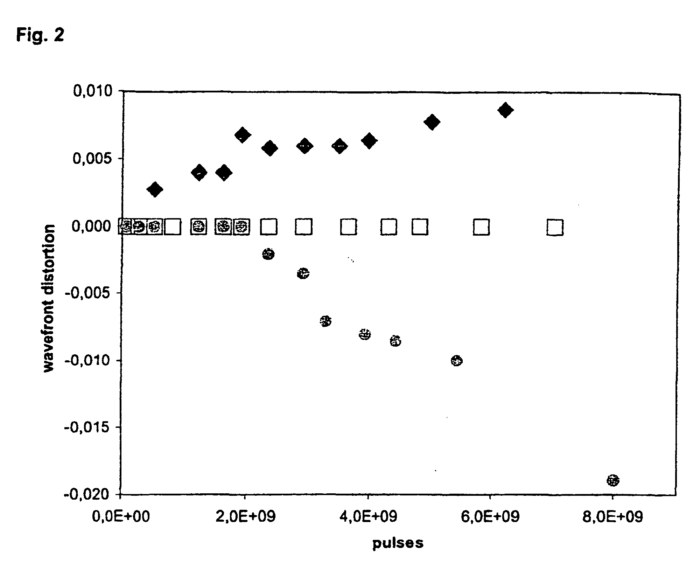

Mit **Figur 2** wird eine weitere Darstellung des Auftretens von Kompaktierung und Dekompaktierung bei einer konstanten Pulsenergiedichte von 0,03 mJ/cm$^2$ als Funktion der Pulszahl (in Figur 2 X-Achsenbezeichnung "pulses") gegeben. Auf der Y-Achse von Figur 2 ist die Wellenfrontverzerrung ("wavefront distortion") in Bruchteilen der Wellenlänge des eingestrahlten Lichts, - hier Licht einer Wellenlänge von 633 nm - aufgetragen. Die Wellenfrontverzerrung ergibt sich dadurch, dass die eingestrahlte, ebene Wellenfront durch räumlich unterschiedliche Brechungsindices gestört wird. Die Wellenfrontverzerrung ist somit ein Maß für das Auftreten von Kompaktierung oder Dekompaktierung. In Figur 2 sind die Messwerte an einem Quarzglas mit 250 Gew.-ppm OH und einem $H_2$-Gehalt von $3 \times 10^{16}$ Moleküle/cm$^3$ sind als Rauten dargestellt. Hier wird Kompaktierung beobachtet. Die Messwerte an einem Quarzglas mit 1200 Gew.-ppm OH und einem $H_2$-Gehalt von $1 \times 10^{18}$ Moleküle/cm$^3$ sind als Kreise dargestellt. Hier wird Dekompaktierung beobachtet.

Messungen an einem optimiertem Quarzglas sind als offene Quadrate dargestellt, wobei weder Kompaktierung noch Dekompaktierung beobachtet wird. Der OH-Gehalt beträgt hierbei 425 Gew-ppm..

Beispiele für derartige Quarzgläser und Vergleichsbeispiele dazu zeigt Tabelle 1.

## Tabelle 1

| 1 | 2 | 3 | 4 | 5 | 6 | 7 | 8 | 9 | 10 | 11 |
|---|---|---|---|---|---|---|---|---|---|---|
| Nr. | OH-Gehalt [Gew-ppm] | H2-Gehalt [Moleküle/cm$^3$] | SIH-Gruppen [Moleküle/cm$^3$] | O$^\pm$ [g$^{-1}$] | $\Delta$n [ppm] | $\Lambda$ [nm/cm] | ε [mJ/cm$^2$] | Kompaktierung | Dekompak-tierung | Induzierte Absorption |
| 1 | 250 | <1 x 10$^{15}$ | < 5 x 10$^{16}$ | < 10$^{17}$ | < 2 | <2 | 0,01 | nicht gemessen | nicht gem. | Ja |
| 2 | 250 | 2 x 10$^{16}$ | < 5 x 10$^{16}$ | < 10$^{17}$ | < 2 | <2 | 0,01 | Nein | Nein | Nein |
| 2a | 250 | 3 x 10$^{16}$ | < 5 x 10$^{16}$ | < 10$^{17}$ | < 2 | < 2 | 0,03 | Ja | Nein | Nein |
| 3 | 250 | 1 x 10$^{17}$ | 5 x 10$^{16}$ | < 10$^{17}$ | < 2 | < 2 | 0,01 | Nein | Ja | Ja |
| 4 | 1 | <1 x 10$^{15}$ | < 5 x 10$^{16}$ | > 10$^{17}$ | < 2 | < 2 | 0.01 | Ja | Nein | Ja |
| 5 | 900 | 2 x 10$^{16}$ | < 5 x 10$^{16}$ | < 10$^{17}$ | < 2 | < 1 | 0,01 | Nein | Ja | Nein |
| 6 | 600 | 2 x 10$^{16}$ | < 5 x 10$^{16}$ | < 10$^{17}$ | < 2 | < 1 | 0,075 | Nein | Nein | Nein |
| 7 | 425 | 2 x 10$^{16}$ | < 5 x 10$^{16}$ | < 10$^{17}$ | < 2 | < 1 | 0,03 | Nein | Nein | Nein |
| 8 | 425 | 2 x 10$^{16}$ | < 5 x 10$^{16}$ | < 10$^{17}$ | < 2 | < 1 | 0,1 | Ja | Nein | Nein |
| 9 | 425 | 2 x 10$^{16}$ | < 5 x 10$^{16}$ | < 10$^{17}$ | < 2 | < 1 | 0,005 | Nein | Ja | Nein |

Tabelle 1 zeigt die Ergebnisse von Bestrahlungsmessungen an Quarzglas-Rohlingen unterschiedlicher chemischer Zusammensetzung und bei verschiedenen Bestrahlungsbedingungen. In den drei letzten Spalten der Tabelle ist qualitativ angegeben, ob der jeweilige Rohling Kompaktierung, Dekompaktierung oder induzierte Absorp- tion zeigt.

Die in den Spalten 2 bis 7 genannten Eigenschaften werden jeweils an einem zylinderfömigen Quarzglasrohling mit einem Außendurchmesser von 240 mm und einer Dicke von 60 mm ermittelt. Es handelt sich dabei um Rohlinge für Linsen für ein Mikrolithographiegerät, das mit Excimer-Laserstrahlung mit einer Wellenlänge von 193 nm arbeitet. Abgesehen von einem geringen Übermaß, das bei der Fertigung der Linse noch abgetragen wird, entsprechen die Rohling-Abmessungen auch den Linsenabmessungen. Das dem CA-Bereich der daraus erhaltenen Linse entsprechende Quarzglas-Volumen wird hier durch die Kreisfläche der Linse - abzüglich eines Randes von wenigen Millimetern für die Linsenfassung - und der Dicke bestimmt. In der Spalte "O$^\pm$ von Tabelle 1 ist die Sauerstoffdefektstellen-Konzentration angegeben, in der Spalte "$\Delta$n" die über den CA-Bereich ermittelte Brechungsindexdifferenz, und in der Spalte "$\Lambda$" die im CA-Bereich ermittelte maximale Doppelbrechung.

Zur Durchführung der Bestrahlungsversuche wurden aus den jeweiligen Quarzglas-Rohlingen stabförmige Proben mit einer Abmessung von 25 x 25 x 200 mm$^3$ entnommen und in gleicher Art und Weise vorbereitet (Politur der gegenüberliegenden 25 x 25 mm$^2$ -Flächen ).

Zur Klärung des Schädigungsverhaltens der Proben hinsichtlich Kompaktierung oder Dekompaktierung wurden die Proben mit UV-Strahlung einer Wellenlänge von 193 nm bestrahlt, wobei die Pulsenergiedichte variiert wurde, wie in Spalte 8 von Tabelle 1 angegeben. Die Pulszahl bei diesen Bestrahlungsversuche betrug jeweils 5 Milliarden.

In der Spalte "Induzierte Absorption" sind zwei Schädigungsmechanismen zusammengefasst, die sich in einem Anstieg der Absorption äußern, nämlich die lineare Absorptionszunahme und der eingangs beschriebene RDP. Zur Klärung des Schädigungsverhaltens der Proben hinsichtlich induzierter Absorption wurden die Proben ebenfalls mit UV-Strahlung einer Wellenlänge von 193 nm und mit der in Spalte 8 genannten Pulsenergiedichte bestrahlt. Zur Festellung des RDP's genügt eine Pulszahl von 1 Millionen Pulsen, während für die Ermittlung der linearen Absorptionszunahme eine Pulszahl von mindestens 1 Milliarde Pulsen erforderlich ist. Hierzu wird der Transmissionsverlust der Probe bestimmt, indem während der Laserbestrahlung die Abnahme der Intensität der verwendeten Laserstrahlung nach der Probe gemessen wird.

Nach den Bestrahlungsversuchen wurden Kompaktierung und Dekompaktierung bestimmt, indem mit einem handelsüblichen Interferometer (Zygo GPI-XP) bei einer Wellenlänge von 633 nm, die relative Zunahme bzw. Abnahme des Brechungsindex im bestrahlten Bereich im Vergleich zum unbestrahlten Bereich gemessen wurde.

Nachfolgend werden die Verfahren zu Herstellung der Quarzglas-Rohlinge, aus denen die Proben 1 bis 9 untersucht wurden, beispielhaft erläutert:

### 1. Rohlinge 1 bis 4

Hierbei handelt es sich um nach dem Sootverfahren hergestellte Quarzgläser.

### Herstellung eines Sootkörpers

Hierbei werden mittels Knallgasbrennern auf einem Trägerrohr aus Aluminiumoxid mit einem Außendurchmesser von 40 mm unter Bildung eines porösen Sootkörpers schichtweise SiO$_2$-Partikel abgeschieden. Den Knallgasbrennern werden Glasausgangsstoffe und Brennstoffe zugeführt und in der dem jeweiligen Knallgasbrenner zugeordneten Brennerflamme zu SiO$_2$-Partikeln umgesetzt. Die Brenner werden während des Abscheideprozesses kontinuierlich entlang der Längsachse in einem vorgegebenen Bewegungsablauf mit einer Amplitude von 15 cm zwischen zwei ortsfesten Wendepunkten hin- und herbewegt, wobei eine SiO$_2$-Schicht nach der anderen auf dem Trägerohr bzw. auf der Oberfläche des sich bildenden Sootkörpers abgeschieden wird, bis dieser einen Außendurchmesser von etwa 300 mm aufweist.

Nach Ende des Abscheideverfahrens und Entfernen des Trägerrohres wird das so erhaltene Sootrohr zum Entfernen der herstellungsbedingt eingebrachten Hydroxylgruppen einer Dehydratationsbehandlung unterworfen.

### Dehydratationsbehandlung bei den Rohlingen 1 bis 3

Zum Zweck der Dehydratation wird das Sootrohr über eine Behandlungsdauer von etwa 8 Stunden bei einer Temperatur um 900 °C in einer Vakuumkammer behandelt. Dadurch stellt sich eine im wesentlichen über das Volumen homogene Hydroxylgruppenkonzentration (OH-Gehalt) von etwa 250 Gew-ppm ein.

### Dehydratationsbehandlung bei Rohling 4

Zum Zweck der Dehydratation wird das Sootrohr in vertikaler Ausrichtung in einen Dehydratationsofen eingebracht und zunächst bei einer Temperatur um 900° C in einer chlorhaltigen Atmosphäre behandelt. Die Behandlungsdauer beträgt etwa acht Stunden. Dadurch wird eine Hydroxylgruppenkonzentration (OH-Gehalt) von weniger als 10 Gew-ppm erhalten.

**Verglasungsprozess bei den Rohlingen 1 und 4**

Anschließend wird das behandelte Sootrohr in einem vertikal orientierten Vakuum-Verglasungsofen bei einer Temperatur im Bereich um 1400 °C gesintert, indem es einer ringförmigen Heizzone zugeführt und darin zonenweise erhitzt wird. Nach dem Verglasen ist molekularer Wasserstoff in dem gesinterten (verglasten) Quarzglas-Rohr nicht mehr nachweisbar (< 1 x $10^{15}$ Moleküle/cm$^3$). Der OH-Gehalt liegt in dem in Tabelle 1 genannten Bereich.

**Verglasungsprozess bei Rohling 2 und 2a**

Nach dem Dehydratationsprozess wird das behandelte Sootrohr anschließend in einem vertikal orientierten Verglasungsofen bei einer Temperatur im Bereich um 1400 °C gesintert, indem es einer ringförmigen Heizzone zugeführt und darin zonenweise erhitzt wird. Dabei wird im Verglasungsofen wasserstoffhaltige Atmosphäre mit einem Wasserstoffpartialdruck von 10 mbar aufrechterhalten. Nach der Behandlung zeigt das gesinterte (verglaste) Quarzglas-Rohr über seine Wandstärke einen inhomogenen Verlauf der Wasserstoff-Konzentration, derart, dass die Wasserstoffkonzentration von der Rohrmantelfläche und von der Rohrinnenbohrung radial zur Mitte der Rohrwandung hin abnimmt. Über die Wandstärke gemittelt liegt der $H_2$-Gehalt bei etwa 4 x $10^{16}$ Molekülen/cm$^3$. Der OH-Gehalt liegt in dem in Tabelle 1 genannten Bereich.

**Verglasungsprozess bei Rohling 3**

Bei Rohling 3 wird das behandelte Sootrohr anschließend in einem vertikal orientierten Verglasungsofen bei einer Temperatur im Bereich um 1400 °C gesintert, indem es einer ringförmigen Heizzone zugeführt und darin zonenweise erhitzt wird. Dabei wird im Verglasungsofen wasserstoffhaltige Atmosphäre, mit einem Wasserstoffpartialdruck von 150 mbar, aufrechterhalten. Nach der Behandlung zeigt das gesinterte (verglaste) Quarzglas-Rohr über seine Wandstärke einen inhomogenen Verlauf der Wasserstoff-Konzentration, derart, dass die Wasserstoffkonzentration von der Rohrmantelfläche und von der Rohrinnenbohrung radial zur Mitte der Rohrwandung hin abnimmt. Über die Wandstärke gemittelt liegt der $H_2$-Gehalt bei etwa 2 x $10^{17}$ Molekülen/cm$^3$ . Der OH-Gehalt liegt in dem in Tabelle 1 genannten Bereich.

**Umformprozess und Homogenisieren der Rohlinge 1 bis 4**

Aus dem gesinterten (verglasten) Quarzglas-Rohr wird durch Umformen und anschließendem Homogenisieren (Verdrillen und Wenden) ein Vollzylinder mit einem Außendurchmesser von 300 mm und einer Länge von 100 mm hergestellt. Der Rohling wird in einem Tempervorgang unter Luft und Atmosphärendruck auf 1100 °C erhitzt und anschließend mit einer Abkühlrate von 1 °C/h abgekühlt. Anschließend werden radial 30 mm und beidseitig axial 20 mm Übermass entfernt, um so Gradienten der Wasserstoffkonzentration bedingt durch Ausdiffusion zu vermeiden. Der Rohling weist den OH-Gehalt auf gemäß Tabelle 1 und den Wasserstoffgehalt wie in der Tabelle angegeben. Die Konzentration an Si-H-Gruppen beträgt - mit Ausnahme von Rohling 3 - weniger als 5 x $10^{16}$ Moleküle pro cm$^3$ (jeweils gemessen im CA-Bereich). Es wird eine Spannungsdoppelbrechung von weniger als 2 nm/cm gemessen, und die Brechzahlverteilung ist derart homogen, dass der Unterschied zwischen dem Maximalwert und dem Minimalwert unterhalb von 2x$10^{-6}$ liegt. Die Konzentration an Sauerstoffdefektstellen wird bei den Rohlingen 1, 2 und 3 mit weniger als 1 x $10^{17}$ pro g ermittelt, wohingegen sie bei Rohling 4 oberhalb dieses Wertes liegt.

Durch das Homogenisieren wird eine gleichmäßige Verteilung der genannten Komponenten über das gesamte Zylindervolumen erreicht. Dies gilt insbesondere auch für den Wasserstoffgehalt von Rohling 2 und 2a.

**2. Rohlinge 5 und 6**

Hierbei handelt es sich um nach dem Direktverglasungsverfahren hergestellte Quarzgläser.

**Abscheideprozess**

Auf einem scheibenförmigen, um seine Mittelachse rotierenden Substrat wird mittels eines Knallgasbrenners feinteiliges $SiO_2$ abgeschieden, das unmittelbar durch die Hitze der Knallgasflamme unter Bildung eines stabförmigen Quarzglasrohlings verglast wird. Aufgrund der verwendeten Ausgangssubstanzen ist der Quarzglasrohling praktisch chlorfrei (der Chlorgehalt liegt unterhalb von 1 Gew.-ppm). Der Wasserstoffgehalt liegt in diesem Verfahrensstufe noch bei etwa 1 x $10^{18}$ Molekülen/cm$^3$.

**Maßnahmen zum Einstellen der OH-Gehalte bei Rohling 5 und 6**

Wie aus Tabelle 1 ersichtlich, unterscheiden sich die Rohlinge 5 und 6 lediglich in den jeweiligen OH-Gehalten. Der OH-Gehalt wird dadurch vorgegeben, dass während des Abscheidevorgangs die Substrattemperatur durch Erhöhen bzw. Erniedrigen der Wasserstoff- und Sauerstoffzuflüsse im Knallgasbrenner eingestellt wird. Eine Temperaturerhöhung führt zu einem höheren OH-Gehalt, während eine Erniedrigung der Temperatur zu einem niedrigen OH-Gehalt führt.

**Umformprozess und Homogenisieren der Rohlinge 5 und 6**

Zum Homogenisieren wird der Quarzglasrohling anschließend in eine Quarzglas-Drehbank eingespannt, zonenweise auf eine Temperatur von ca. 2000 °C erhitzt und dabei verdrillt. Ein dafür geeignetes Homogenisierungsverfahren ist in der EP-A1 673 888 beschrieben. Nach mehrmaligem Verdrillen liegt ein Quarzglaskörper in Form eines Rundstabes mit einem Durchmesser von 80 mm und einer Länge von ca. 800 mm vor, der in drei Richtungen schlierenfrei ist.

Durch eine Heißverformung bei einer Temperatur von 1700 °C und unter Verwendung einer stickstoffgespülten Schmelzform wird daraus ein kreisrunder Quarzglaszylinder mit einem Außendurchmesser von 300 mm und einer Länge von 100 mm gebildet. In einem Tempervorgang wird der Quarzglaszylinder unter Luft und Atmosphärendruck auf 1100 °C erhitzt, für ca. 100h bei dieser Temperatur gehalten und anschließend mit einer Abkühlrate von 1 °C/h abgekühlt. Anschließend werden radial 30mm und beidseitig axial 20 mm Übermass entfernt, um so Gradienten der Wasserstoffkonzentration bedingt durch Ausdiffusion zu vermeiden. Der Rohling weist eine Wasserstoffkonzentration von ca. 2 x $10^{16}$ Molekülen/cm$^3$ und einen OH-Gehalt von ca. 900 Gew.-ppm (Rohling 5) bzw. von 600 Gew.-ppm (Rohling 6) auf. Es wird lediglich noch eine Spannungsdoppelbrechung von maximal 2 nm/cm gemessen, und die Brechzahlverteilung ist derart homogen, dass der Unterscheid zwischen dem Maximalwert und dem Minimalwert unterhalb von $2 \times 10^{-6}$ liegt.

Der so hergestellte Quarzglaszylinder ist als Rohling für die Herstellung einer optischen Linse für ein Mikrolithographiegerät unmittelbar geeignet.

### 3. Rohlinge 7 bis 9

Die Rohlinge 7 bis 9 bestehen aus dem gleichen Quarzglas. Es handelt sich um eine Quarzglas-Qualität, die durch Mischen von nach dem Sootverfahren hergestelltem Quarzglas und nach dem Direktverglasungsverfahren hergestelltem Quarzglas erhalten wird.

Hierzu wird ein Quarzglas-Stab aus einem dem Rohling 2 entsprechenden Quarzglas, und ein weiterer Quarzglas-Stab aus einem dem Rohling 6 entsprechenden Quarzglas hergestellt und miteinander vermischt. Die Mengenverhältnisse der beiden Quarzglas-Qualitäten werden dabei so gewählt, dass sich bei Einsatz des Mischquarzglases in Verbindung mit UV-Strahlung einer Wellenlänge von 193 nm und einer Pulsenergie $\varepsilon$ = 0,03 mJ/cm$^2$ ein OH-Gehalt einstellt, der folgender Bemessungsregel genügt:

$$C_{OH} \text{ [Gew-ppm]} = 1700 \cdot \varepsilon^{0,4} \qquad (\varepsilon \text{ in mJ/cm}^2)$$

Mit $\varepsilon$ = 0,03 mJ/cm$^2$ ergibt sich nach dieser Bemessungsregel ein im Mischquarzglas einzustellender OH-Gehalt von etwa 425 Gew-ppm (genau: 418 Gew-ppm).

Da das Quarzglas entsprechend Rohling 2 einen OH-Gehalt von 250 Gew-ppm und das Quarzglas entsprechend Rohling 6 einen OH-Gehalt von 600 Gew-ppm aufweist, werden zur Einstellung eines OH-Gehalts im Mischquarzglas von 425 Gew-ppm gleiche Mengen beider Quarzglas-Qualitäten benötigt. Diese werden jeweils in Form von Quarzglas-Stäben mit einem Gewicht von 8 kg bereitgestellt. Die Quarzglas-Stäbe werden miteinander verdrillt, indem die Stäbe sich zunächst längsseitig berührend angeordnet, zonenweise auf eine Temperatur von etwa 2000 °C erhitzt, dabei erweicht und um eine gemeinsame, parallel zur Längsachse verlaufende Rotationsachse unter Bildung einer Misch-Quarzglases rotiert werden. Zur Beseitigung verbleibender Schlieren wird anschließend das in der EP-A1 673 888 beschriebene mehrmalige Verdrillen und Wenden durchgeführt.

Durch anschließende Heißverformung bei einer Temperatur von 1700 °C und unter Verwendung einer stickstoffgespülten Schmelzform wird daraus ein kreisrunder Mischquarzglaszylinder mit einem Außendurchmesser von 300 mm und einer Länge von 100 mm gebildet. In einem Tempervorgang wird der Quarzglaszylinder unter Luft und Atmosphärendruck auf 1100 °C erhitzt, für ca. 50h bei dieser Temperatur gehalten und anschließend mit einer Abkühlrate von 1 °C/h abgekühlt. Danach werden radial 30 mm und beidseitig axial 20 mm Übermass entfernt, um so Gradienten der Wasserstoffkonzentration bedingt durch Ausdiffusion zu vermeiden. Der Rohling weist eine Wasserstoffkonzentration von ca. 2 x$10^{16}$ Molekülen/cm$^3$ und einen OH-Gehalt von ca. 425 Gew.-ppm auf, was dem Mittelwert des OH-Gehalts der ursprünglichen Rohlinge 2 und 6 entspricht. Es wird lediglich noch eine Spannungsdoppelbrechung von maximal 2 nm/cm gemessen, und die Brechzahlverteilung ist derart homogen, dass der Unterschied zwischen dem Maximalwert und dem Minimalwert unterhalb von 2x$10^{-6}$ liegt.

Auch dieser Quarzglas-Block ist als Rohling für die Herstellung einer optischen Linse für ein Mikrolithographiegerät unmittelbar geeignet.

## Maßnahmen zur Auswahl der Ober- und Untergrenze des H$_2$-Gehaltes

Für die Auswahl der Obergrenze und der Untergrenze des H$_2$-Gehalts gelten die Bemessungsregeln (3) und (4) in Verbindung mit der typischen Einsatz-Pulsenergiedichte von 0,03 mJ/cm$^2$ . Die Einstellung des vorgegebenen H$_2$-Gehalts erfolgt durch die oben beschriebene Temperung der Rohlinge bei 1100°C unter Berücksichtigung der dabei ablaufenden Diffusionsprozesse.

Dadurch ergibt sich ein H$_2$-Gehalt von 1,4 x $10^{18}$ Molekülen/cm$^3$, der damit unter Berücksichtigung der Ausdiffusion während der Temperung des heißverformten Linsenrohlings (s.o.) (H$_2$ Verlust durch Ausdiffusion ca. 30%) innerhalb der Grenzen C$_{H2min}$ und C$_{H2max}$ liegt, die durch die Bemessungsregeln (3) und (4) für $\varepsilon$ = 0,03 mJ/cm$^2$ folgendermaßen spezifiziert sind:

$$C_{H2min} \text{ [Moleküle/cm}^3\text{] } = 1{,}0 \times 10^6 \, (0{,}03)^2 \, P$$

$$C_{H2max} \text{ [Moleküle/cm}^3\text{] } = 2 \times 10^{18} \, (0{,}03)$$

Mit $\varepsilon$ = 0,03 mJ/cm$^2$ ergibt sich nach dieser Bemessungsregel und einer maximalen Pulszahl von 1 x $10^{12}$ ein im Quarzglas einzustellender minimaler H$_2$-Gehalt von 9x$10^{14}$ Molekülen/cm$^3$ und ein maximaler H$_2$-Gehalt von 6 x$10^{16}$ Molekülen/cm$^3$.

Die Einstellung des vorgegebenen H$_2$-Gehaltes erfolgt durch die oben beschriebene Temperung der Rohlinge bei 1100°C unter Berücksichtigung der dabei ablaufenden Diffusionsprozesse.

Zum Homogenisieren wird der Quarzglasrohling in eine Quarzglas-Drehbank eingespannt, zonenweise auf eine Temperatur von ca. 2000 °C erhitzt und dabei verdrillt. Ein dafür geeignetes Homogenisierungsverfahren ist in der EP-A1 673 888 beschrieben. Nach mehrmaligem Verdrillen liegt ein Quarzglaskörper in Form eines Rundstabes mit einem Durchmesser von 80 mm und einer Länge von ca. 800 mm vor, der in drei Richtungen schlierenfrei ist.

Durch eine Heißverformung bei einer Temperatur von 1700 °C und unter Verwendung einer stickstoffgespülten Schmelzform wird daraus ein kreisrunder Quarzglaszylinder mit einem Außendurchmesser von 240 mm und einer Länge von 80 mm gebildet. Nach einem weiteren Tempervorgang, bei der der Quarzglaszylinder unter Luft und Atmosphärendruck auf 1100 °C erhitzt und anschließend mit einer Abkühlrate von 2°C/h auf 900°C abgekühlt wird, wird lediglich noch eine Spannungsdoppelbrechung von maximal 2 nm/cm gemessen, und die Brechzahlverteilung ist derart homogen, dass der Unterscheid zwischen dem Maximalwert und dem Minimalwert unterhalb von 2x $10^{-6}$ liegt. Aus den zentralen Bereich des Rohlings wird eine stabförmige Probe mit einer Abmessung von 25 x 25 x 200 mm$^3$ entnommen, die einen H$_2$ Gehalt von ca. 2x1016 Molekülen/cm$^3$ und ca. 425 Gew-ppm OH aufweist.

## Ergebnisbewertung

Hinsichtlich des Auftretens von Kompaktierung, Dekompaktierung und induzierter Absorption gemäß Tabelle 1 zeigen die Rohlinge 2 und 7 bei einer Energiedichte von 0,01 bzw. 0,03 mJ/cm$^2$ die besten Ergebnisse. Rohling 2a mit einem geringfügig höheren H$_2$-Gehalt als Rohling 2 zeigt bei Einwirkung von ultravioletter Strahlung einer Energiedichte von 0,03 mJ/cm$^2$ Kompaktierung (vergleiche Figur 2), was je nach Anwendungsfall in Grenzen tolerierbar sein kann. Rohling 6 zeigt gundsätzlich ein gutes Ergebnis hinsichtlich Kompaktierung, Dekompaktierun und induzierter Absorption, dies allerdings nur bei einer verhältnismäßig hohen Energiedichte von 0,075 mJ/cm$^2$. In Bezug auf den relativ hohen OH-Gehalt bei Rohling 6, der tendenziell eher zu Dekompaktierung führt, ist dessen Einsatz zum Mischen mit einem Rohling, der nach dem Sootverfahren hergestellt ist und einen besonders niedrigen OH-Gehalt aufweist, besonders geeignet. Dies wird durch die Ergebnisse von Rohling 7 bestätigt.

**Patentansprüche**

1. Quarzglasrohling für ein optisches Bauteil zur Übertragung ultravioletter Strahlung einer Wellenlänge von 250 nm und kürzer mit einer Glasstruktur im wesentlichen ohne Sauerstoffdefektstellen, einem $H_2$-Gehalt im Bereich von $0,1 \times 10^{16}$ Molekülen/cm$^3$ bis $4,0 \times 10^{16}$ Molekülen/cm$^3$, einem OH-Gehalt im Bereich von 125 Gew-ppm bis 450 Gew-ppm, einem Gehalt an SiH-Gruppen von $< 5 \times 10^{16}$ Molekülen/cm$^3$, einer Inhomogenität im Brechungsindex $\Delta n$ von weniger als 2 ppm und einer Spannungsdoppelbrechung von weniger als 2 nm/cm.

2. Quarzglasrohling nach Anspruch 1, **dadurch gekennzeichnet, dass** der OH-Gehalt im Bereich von 200 Gew-ppm bis 350 Gew-ppm liegt.

3. Quarzglasrohling nach Anspruch 1 oder 2, **dadurch gekennzeichnet, dass** der $H_2$-Gehalt im Bereich von $1 \times 10^{16}$ Moleküle/cm$^3$ bis $3 \times 10^{16}$ Moleküle/cm$^3$ liegt.

4. Verfahren zur Herstellung eines Quarzglasrohlings nach einem der Ansprüche 1 bis 3 umfassend die Herstellung eines ersten und eines zweiten Quarzglases durch Flammenhydrolyse einer Si-enthaltenden Verbindung, wobei sich das erste und das zweite Quarzglas im OH-Gehalt unterscheiden, **dadurch gekennzeichnet, dass** durch Mischen des ersten Quarzglases und des zweiten Quarzglases ein Mischquarzglas mit einem mittleren OH-Gehalt im Bereich von 125 Gew-ppm bis 450 Gew-ppm erzeugt wird.

5. Verfahren zur Herstellung eines Quarzglasrohlings nach Anspruch 4 **dadurch gekennzeichnet, dass** zur Herstellung des ersten Quarzglases mit einem ersten OH-Gehalt $SiO_2$-Partikel gebildet und auf einem rotierenden Träger schichtweise unter Bildung eines porösen Sootkörpers abgeschieden werden und der Sootkörper anschließend verglast wird, und dass zur Herstellung des zweiten Quarzglases mit einem von dem ersten Quarzglas sich unterscheidenden OH-Gehalt $SiO_2$-Partikel gebildet und auf einen rotierenden Träger unter Bildung einer verglasten Vorform abgeschieden werden.

6. Verfahren zur Herstellung eines Quarzglasrohlings nach Anspruch 4 oder 5, **dadurch gekennzeichnet, dass** das erste Quarzglas einen OH-Gehalt im Bereich von 10 Gew-ppm bis 300 Gew-ppm, das zweite Quarzglas einen OH-Gehalt im Bereich von 400 Gew-ppm bis 1300 Gew-ppm aufweist.

7. Verfahren zur Herstellung eines Quarzglasrohlings nach Anspruch 6, **dadurch gekennzeichnet, dass** das Mischen durch Verdrillen und Wenden von je einem Quarzglaskörper des ersten Quarzglases mit einem des zweiten Quarzglases erfolgt.

8. Verwendung eines Quarzglasrohlings nach einem der Ansprüche 1 bis 3 für ein Bauteil für den Einsatz in der Mikrolithographie in Verbindung mit ultravioletter Strahlung einer Wellenlänge von 250 nm und kürzer, **dadurch gekennzeichnet, dass** für einen Einsatz mit ultravioletter Strahlung einer vorgegebenen Pulsenergiedichte $\varepsilon$ von mindestens 0,005 mJ/cm$^2$ ein Quarzglas mit einem OH-Gehalt ausgewählt wird, der folgender Bemessungsregel genügt:

$$C_{OH} \text{ [Gew-ppm]} = 1,7 \times 10^3 \cdot \varepsilon^{0,4} \pm 50 \tag{2}$$

9. Verwendung eines Quarzglasrohlings nach Anspruch 8, **dadurch gekennzeichnet, dass** ein Quarzglas mit einem OH-Gehalt ausgewählt wird, der folgender Bemessungsregel genügt:

$$C_{OH} \text{ [Gew-ppm]} = 1,7 \times 10^3 \cdot \varepsilon^{0,4} \pm 25$$

10. Verwendung eines Quarzglasrohlings nach Anspruch 8 oder 9, **dadurch gekennzeichnet, dass** die Pulsenergiedichte s kleiner als 0,1 mJ/cm$^2$, vorzugsweise kleiner als 0,05 mJ/cm$^2$, ist.

11. Verwendung eines Quarzglasrohlings nach einem der Ansprüche 8 bis 10, **dadurch gekennzeichnet, dass** für eine vorgegebene Pulszahl P ein Quarzglas ausgewählt wird, das einen Mindestwasserstoffgehalt $C_{H2min}$ und einen Maximalwasserstoffgehalt $C_{H2max}$ aufweist, die folgenden Bemessungsregeln genügen:

$$C_{H2min} \text{ [Moleküle/cm}^3\text{]} = 1,0 \times 10^6 \, \varepsilon^2 \, P \tag{3}$$

und

$$C_{H2max} \text{ [Moleküle/cm}^3\text{]} = 2,0 \times 10^{18} \, \varepsilon \tag{4}$$

(Pulsenergiedichte $\varepsilon$ jeweils in mJ/cm$^2$).

**Claims**

1. A quartz glass blank for an optical component for transmitting ultraviolet radiation of a wavelength of 250 nm and shorter, with a glass structure essentially without oxygen defects, an H$_2$ content ranging from 0.1 x 10$^{16}$ molecules/cm$^3$ to 4.0 to 10$^{16}$ molecules/cm$^3$, an OH content ranging from 125 wt ppm to 450 wt ppm, a content of SiH groups of < 5 x 10$^{16}$ molecules/cm$^3$, an inhomogeneity in the refractive index $\Delta$n of less than 2 ppm and a strain birefringence of less than 2 nm/cm.

2. A quartz glass blank as claimed in claim 1, **characterized in that** the OH content is within the range of 200 wt ppm to 350 wt ppm.

3. A quartz glass blank as claimed in claim 1 or 2, **characterized in that** the H$_2$ content is within the range of 1 x 10$^{16}$ molecules/cm$^3$ to 3 x 10$^{16}$ molecules/cm$^3$.

4. A method for preparing a quartz glass blank as claimed in any of claims 1 to 3, comprising preparing a first and a second quartz glass by flame hydrolysis of a Si-containing compound, the first and the second quartz glass differing in the OH content, **characterized in that** a mixed quartz glass having a mean OH content within the range of 125 wt ppm to 450 wt ppm is prepared by mixing the first quartz glass and the second quartz glass.

5. A method for preparing a quartz glass blank as claimed in claim 4, **characterized in that** for preparing the first quartz glass with a first OH content SiO$_2$ particles are formed and deposited on a rotating carrier in layers forming a porous soot body, and the soot body is subsequently vitrified, and that for preparing the second quartz glass with an OH content differing from the first quartz glass SiO$_2$ particles are formed and deposited on a rotating carrier forming a vitrified preform.

6. A method for preparing a quartz glass blank as claimed in claim 4 or 5, **characterized in that** the first quartz glass has an OH content ranging from 10 wt ppm to 300 wt ppm, the second quartz glass has an OH content ranging from 400 wt ppm to 1300 wt ppm.

7. A method for preparing a quartz glass blank as claimed in claim 6, **characterized in that** mixing is carried out by twisting and turning a respective quartz glass body of the first quartz glass with one of the second quartz glass.

8. Use of a quartz glass blank as claimed in any of claims 1 to 3 for a component for use in microlithography in combination with ultraviolet radiation of a wavelength of 250 nm and shorter, **characterized in that** for an application with ultraviolet radiation of a predetermined pulse energy density $\varepsilon$ of at least 0.005 mJ/cm$^2$ a quartz glass is selected with an OH content satisfying the following dimensioning rule:

$$C_{OH} \text{ [wt ppm]} = 1.7 \times 10^3 \cdot \varepsilon^{0.4} \pm 50 \tag{2}$$

9. Use of a quartz glass blank as claimed in claim 8, **characterized in that** a quartz glass is selected with an OH content satisfying the following dimensioning rule:

$$C_{OH} \text{ [wt ppm]} = 1.7 \times 10^3 \cdot \varepsilon^{0.4} \pm 25$$

10. Use of a quartz glass blank as claimed in claim 8 or 9, **characterized in that** the pulse energy density ε is less than 0.1 mJ/cm$^2$, particularly less than 0.05 mJ/cm$^2$.

11. Use of a quartz glass blank as claimed in any of claims 8 to 10, **characterized in that** for a predetermined pulse number P a quartz glass is selected that has a minimum hydrogen content $C_{H2min}$ and a maximum hydrogen content $C_{H2max}$ satisfying the following dimensioning rules:

$$C_{H2min} \text{ [molecules/cm}^3] = 1.0 \times 10^6 \, \varepsilon^2 \, P \qquad (3)$$

and

$$C_{H2max} \text{ [molecules/cm}^3] = 2.0 \times 10^{18} \, \varepsilon \qquad (4)$$

(Pulse energy density ε each time in mJ/cm$^2$)

**Revendications**

1. Ebauche en verre de quartz pour un composant optique pour la transmission de rayonnement ultraviolet d'une longueur d'ondes inférieure ou égale à 250 nm avec une structure de verre essentiellement sans défaut d'oxygène, une teneur en H$_2$ comprise entre 0,1 x 10$^{16}$ de molécules/cm$^3$ et 4,0 x 10$^{16}$ molécules/cm$^3$, une teneur en OH comprise entre 125 ppm en poids et 450 ppm en poids, une teneur en groupes SiH > 5 x 10$^{16}$ molécules/cm$^3$, une inhomogénéité dans l'indice de réfraction Δn inférieure à 2 ppm et une double réfraction de tension inférieure à 2 nm/cm.

2. Ebauche en verre de quartz selon la revendication 1, **caractérisée en ce que** la teneur en OH est comprise entre 200 ppm en poids et 350 ppm en poids.

3. Ebauche en verre de quartz selon la revendication 1 ou 2, **caractérisée en ce que** la teneur en H2 est comprise entre 1 x 10$^{16}$ de molécules/cm$^3$ et 3 x 10$^{16}$ molécules/cm$^3$.

4. Procédé pour la fabrication d'une ébauche de verre de quartz selon l'une des revendications 1 à 3, comprenant la fabrication d'un premier et d'un second verre de quartz par hydrolyse à la flamme d'un composé contenant du Si, le premier et le second verre de quartz se différenciant dans la teneur en OH, **caractérisé en ce que** par mélange du premier verre de quartz et du second verre de quartz, il est produit un verre de quartz mixte avec une teneur moyenne en OH comprise entre 125 ppm en poids et 450 ppm en poids.

5. Procédé pour la fabrication d'une ébauche de verre de quartz selon la revendication 4, **caractérisé en ce que** pour la fabrication d'un premier verre de quartz avec une première teneur en OH, il est formé des particules de SiO$^2$ qui sont déposées en couche sur un substrat rotatif en formant un corps de suie poreux et **en ce que** le corps de suie est ensuite vitrifié, et **en ce que** pour la fabrication du second verre de quartz avec une teneur en OH différente du premier verre de quartz, il est formé des particules de SiO$^2$ qui sont déposées sur un substrat rotatif en formant une ébauche vitrifiée.

6. Procédé pour la fabrication d'une ébauche de verre de quartz selon la revendication 4 ou 5, **caractérisé en ce que** le premier verre de quartz présente une teneur en OH comprise entre 10 ppm en poids et 300 ppm en poids et le second verre de quartz une teneur en OH comprise entre 400 ppm en poids et 1300 ppm en poids.

7. Procédé pour la fabrication d'une ébauche de verre de quartz selon la revendication 6, **caractérisé en ce que** le mélange s'effectue par torsadage ou par retournement respectivement d'un corps du premier verre de quartz avec un corps du second verre de quartz.

8. Utilisation d'une ébauche de verre de quartz selon l'une des revendications 1 à 3 pour un composant pour l'emploi dans la microlithographie en liaison avec le rayonnement ultraviolet d'une longueur d'ondes inférieure ou égale à 250 nm, **caractérisé en ce que** pour l'emploi avec le rayonnement ultraviolet d'une densité d'énergie ε en mode impulsionnel prédéterminé d'au moins 0,005 mJ/cm$^2$, on sélectionne un verre de quartz avec une teneur en OH qui répond à la règle de mesure suivante

$$C_{OH} \text{ [ppm en poids]} = 1,7 \text{ x } 10^3 \cdot \varepsilon^{0,4} \pm 50 \tag{2}$$

9. Utilisation d'une ébauche de verre de quartz selon la revendication 8, **caractérisée en ce qu'**on sélectionne un verre de quartz avec une teneur en OH qui répond à la règle de mesure suivante

$$C_{OH} \text{ [ppm en poids]} = 1,7 \text{ x } 10^3 \cdot \varepsilon^{0,4} \pm 25$$

10. Utilisation d'une ébauche de verre de quartz selon la revendication 8 ou 9, **caractérisée en ce que** la densité d'énergie $\varepsilon$ en mode impulsionnel est inférieure à 0,1 mJ/cm$^2$, de préférence inférieure à 0,05 mJ/cm$^2$.

11. Utilisation d'une ébauche de verre de quartz selon l'une des revendications 8 à 10, **caractérisée en ce que** pour un nombre en mode impulsionnel prédéterminé, il est sélectionné un verre de quartz qui présente une teneur minimale en hydrogène $C_{H2min}$ et une teneur maximale en hydrogène $C_{H2max}$ qui répondent aux règles de mesure suivantes:

$$C_{H2min} \text{ [molécules/cm}^3\text{]} = 1,0 \text{ x } 10^6 \, \varepsilon^2 \, P \tag{3}$$

et

$$C_{H2max} \text{[molécules/cm}^3\text{]} = 2,0 \text{ x } 10^{18} \, \varepsilon$$

(densité d'énergie $\varepsilon$ en mode impulsionnel exprimée respectivement en mJ/cm$^3$)

**Fig. 1**

**Fig. 2**